# EUROPÄISCHE PATENTSCHRIFT

(11) **EP 1 366 610 B1**
(45) Veröffentlichungstag und Bekanntmachung des Hinweises auf die Patenterteilung: **06.02.2008**
(21) Anmeldenummer: 01994605.2
(22) Anmeldetag: 07.12.2001
(51) Int. Cl.: H04L 27/00

(54) **BLINDE DETEKTION FÜR MOBILFUNKEMPFÄNGER**
BLIND DETECTION FOR MOBILE RADIO RECEIVERS
DETECTION AVEUGLE POUR RECEPTEUR RADIO MOBILE

(30) Priorität: 08.03.2001 DE 10111206
(43) Veröffentlichungstag der Anmeldung: 03.12.2003
(73) Patentinhaber: Infineon Technologies AG, 81669 München (DE)
(72) Erfinder: WEBER, Michael, 85356 Freising (DE); YANG, Bin, 81735 München (DE)
(74) Vertreter: Lange, Thomas
(86) Internationale Anmeldenummer: PCT/DE2001/004651
(87) Internationale Veröffentlichungsnummer: WO 2002/073915

(56) Entgegenhaltungen:
- EP-A- 1 230 772
- WO-A-00/62498
- WO-A-01/03397
- WO-A-01/39449
- AZZOUZ E E ET AL: "Automatic identification of digital modulation types" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, Bd. 47, Nr. 1, 1. November 1995 (1995-11-01), Seiten 55-69, XP004000047 ISSN: 0165-1684
- "Digital cellular telecommunications system (Phase 2+); General Packet Radio Service (RPRS); Overall description of the GPRS radio interface; Stage 2 (GSM 03.64 version 8.5.0 Release 1999" ETSI TS 101 350 V8.5.0 (2000-8), 25. August 2000 (2000-08-25), XP002193183

## Beschreibung

Die Erfindung betrifft einen Mobilfunkempfänger mit einer Einheit zur Modulationsschätzung, welche für jeden empfangenen Datenburst schätzt, entsprechend welchem Modulationsverfahren der Datenburst moduliert ist. Des weiteren betrifft die Erfindung ein Verfahren zur Dekodierung von Datenbursts in einem Mobilfunkempfänger.

In bisher verwendeten Mobilfunkdiensten wurde hauptsächlich das Modulationsverfahren GMSK (Gaussian Minimum Shift Keying) verwendet, bei dem jedes Datensymbol durch einen von zwei möglichen Zuständen im Zustandsraum repräsentiert wird. Der bislang verwendete Paketdienst GPRS (General Paket Radio Service) beispielsweise verwendet ausschließlich das Modulationsverfahren GMSK.

Um höhere Datenübertragungsraten zu erzielen, geht man zur Zeit vom Modulationsverfahren GMSK auf das Modulationsverfahren 8PSK (8 Phase Shift Keying) über. Bei diesem Modulationsverfahren wird jedes Datensymbol durch einen von 8 möglichen Zuständen in einem zweidimensionalen Zustandsraum dargestellt. Durch Verwendung von 8PSK kann die Datenübertragungsrate bei der Mobilfunkübertragung um den Faktor 3 erhöht werden.

Im Nachfolgestandard zum Paketdienst GPRS, dem Paketdienst EGPRS (Enhanced General Paket Radio Service) werden die beiden Modulationsverfahren GMSK und 8PSK zusammen verwendet. In diesem Paketdienst ist ein Wechsel des Modulationsverfahrens während der Datenübertragung grundsätzlich möglich, allerdings müssen vier aufeinanderfolgend übertragene Datenbursts gemäß derselben Modulationsart moduliert sein. In EGPRS ist es also möglich, zuerst vier GMSK-modulierte Datenbursts zu übertragen, anschließend vier 8PSK-modulierte Datenbursts zu übertragen, etc.

Auf Empfängerseite, also auf Seiten der Mobilstation, ist hinsichtlich der empfangenen Datenbursts nicht von vornherein bekannt, gemäß welchem Modulationsverfahren auf Senderseite kodiert wurde. Empfängerseitig wird die Kenntnis des auf Senderseite verwendeten Modulationsverfahren aber benötigt, und zwar zum einen für die Kanalentzerrung und zum anderen für die nachfolgende Kanaldekodierung.

Der Kanalentzerrer ist zur Beseitigung der Intersymbol-Interferenz vorgesehen. Die Intersymbol-Interferenz kommt dadurch zustande, dass verschiedene Signalanteile des gesendeten Signals auf unterschiedlichen Ausbreitungspfaden zum Empfänger gelangen und insofern verschieden stark verzögert werden. Zur Kompensation dieser durch die Multipfad-Ausbreitung verursachten Fehler wird zunächst das Übertragungsverhalten des Kanals geschätzt. Basierend auf der Kanalschätzung wird dann durch den Kanalentzerrer mittels eines Viterbi-Verfahrens eine Entzerrung der empfangenen Signale durchgeführt. Um eine derartige Viterbi-basierte Entzerrung vornehmen zu können, muss das sendeseitig verwendete Modulationsverfahren bekannt sein.

Nach Entzerrung der Eingangsdaten werden diese der Dekodierstufe zugeführt, welche für das Deinterleaving, die Faltungsdekodierung sowie für Cyclic Redundancy Checks (CRC) zuständig ist. Auf Senderseite wurde der anfangs vorliegende Eingangsdatenstrom einer Faltungskodierung unterworfen, um zusätzliche Redundanz zu schaffen. Auf diese Weise kann eine gewisse Robustheit gegenüber kurzfristigen Übertragungsstörungen geschaffen werden. Empfängerseitig wird der empfangene Datenstrom einer Faltungsdekodierung unterworfen, um die senderseitig erzeugte Redundanz wieder zu beseitigen. Für die Faltungsdekodierung wird das Viterbi-Verfahren eingesetzt. Auch zur Durchführung der Faltungsdekodierung muss empfängerseitig bekannt sein, entsprechend welchem Modulationsverfahren der zu dekodierende Datenburst moduliert wurde. Für die Dekodierung GMSK-modulierter Datenbursts muss ein anderer Faltungsdekodierer verwendet werden als für 8PSK-modulierte Datenbursts.

Zusammenfassend ist festzustellen, dass sowohl im Kanalentzerrer als auch im Kanaldekodierer die Wahl der Basisband-Algorithmen von der senderseitig verwendeten Modulationsart abhängt. Insofern muss der Empfänger selbst in der Lage sein, das Modulationsverfahren anhand des empfangenen Signals ohne Zuhilfenahme zusätzlicher Informationen zu bestimmen. Dies wird als blinde Detektion bezeichnet.

Die blinde Detektion geschieht vor der Kanalentzerrung und der Kanaldekodierung. Im Stand der Technik sind Algorithmen zur Durchführung der blinden Detektion bekannt, mit denen sich für jeden Datenburst ermitteln lässt, welches Modulationsverfahren senderseitig verwendet wurde.

Im GSM-Standard sind jeweils vier aufeinanderfolgende Datenbursts gemäß demselben Modulationsverfahren moduliert. Die vier übereinstimmend modulierten Datenbursts werden entzerrt und dann gemeinsam vom Kanaldekodierer dekodiert. Sowohl für die Kanalentzerrung als auch für die Kanaldekodierung muss die zur Modulation der Datenbursts verwendete Modulationsmethode bekannt sein. Zu diesem Zweck kann für den ersten Datenburst der Gruppe übereinstimmend modulierter Datenbursts mittels blinder Detektion die verwendete Detektionsart bestimmt werden. Anschließend kann die Kanalentzerrung und die Kanaldekodierung für alle vier Datenbursts der Gruppe entsprechend dem für den ersten Burst ermittelten Modulationsverfahren durchgeführt werden.

Der Nachteil dieser Vorgehensweise ist, dass bei einer fehlerhaften Modulationsbestimmung für den ersten Datenburst der Gruppe sämtliche Datenbursts der Gruppe fehlerhaft entzerrt und dekodiert werden.

Die Schrift WO 01/39449 A1 behandelt ein Verfahren für die blinde Detektion der Modulation in einem Mobilfunkempfänger. Hierbei wird für jeden einer Vielzahl von übertragenen Datenbursts eine Modulationserkennungsstatistik berechnet, auf deren Grundlage das Modulationsverfahren jedes einzelnen Datenbursts bestimmt wird. Nach einer Identifizierung des meist verwendeten Modulationsverfahrens wird die Vielzahl der Datenbursts dekodiert. Hierbei werden Datenbursts, deren Modulationsverfahren sich von dem meist verwendeten Modulationsverfahren unterscheidet, prozessiert.

In dem Artikel "Automatic identification of digital modulation types" E.E. Azzouz et al., Signal Processing 47 (1995), Elsevier Science, B.V., Seiten 55 - 69, ist ein Verfahren zur Identifizierung eines in einem Sender eingesetzten Modulationsverfahrens im Empfänger beschrieben. Zur Schätzung des Modulationsverfahrens wird eine Mehrheitsentscheidung eingesetzt, welche auf Einzelschätzergebnissen beruht, die bezüglich aufeinander folgender Rahmen durchgeführt werden.

In der Schrift WO 01/03397 A1 ist ein Verfahren angegeben, bei welchem empfängerseitig eine Derotation eines empfangenen Signals entsprechend einer Schätzung des Modulationsverfahrens vorgenommen wird.

In der Schrift WO 00/62498 ist ein Dekodierverfahren beschrieben, bei welchem fehlerhaft derotierte und demodulierte Bursts vor der Dekodierung neutralisiert werden. Zur Erkennung fehlerhaft derotierter und demodulierter Bursts wird ein Konsistenztest bezüglich einer Gruppe von einheitlich modulierten Bursts vorgeschlagen.

Aufgabe der Erfindung ist es, einen Mobilfunkempfänger sowie ein Verfahren zur Dekodierung von Datenbursts in einem Mobilfunkempfänger zur Verfügung zu stellen, wobei eine verbesserte Dekodierung des empfangenen Datenstroms ermöglicht wird.

Diese Aufgabe wird erfindungsgemäß durch einen Mobilfunkempfänger gemäß Anspruch 1 sowie durch ein Verfahren zur Dekodierung von Datenbursts in einem Mobilfunkempfänger gemäß Anspruch 10 gelöst.

Der erfindungsgemäße Mobilfunkempfänger umfasst Mittel zur Modulationschätzung, die für jeden empfangenen Datenburst einer Gruppe einheitlich modulierter Datenbursts schätzen, entsprechend welchem Modulationsverfahren der Datenburst moduliert ist. Darüber hinaus umfasst der Mobilfunkempfänger Mittel zur Kanalentzerrung, die eine Entzerrung der empfangenen Datenbursts durchführen, wobei die Mittel zur Kanalentzerrung jeden Datenburst nach dessen Empfang entsprechend der für diesen Datenburst vorgenommenen Schätzung des Modulationsverfahrens entzerren. Ferner umfasst der Mobilfunkempfänger Mittel zur Kanaldekodierung. Erfindungsgemäß stellen die Mittel zur Kanaldekodierung fest, welches Modulationsverfahren für die Mehrheit der Datenbursts der Gruppe einheitlich modulierter Datenbursts geschätzt wurde. Entsprechend dem überwiegend geschätzten Modulationsverfahren werden die Datenbursts der Gruppe einheitlich modulierter Datenbursts dann dekodiert. Falls ein überwiegend geschätztes Modulationsverfahren für die Gruppe einheitlich modulierter Datenbursts nicht feststellbar ist, werden die Datenbursts der Gruppe nicht dekodiert.

Durch die für jeden Datenburst durchgeführte Modulationsschätzung wird erreicht, dass eine einzelne fehlerhafte Schätzung nicht notwendigerweise zu einer Dekodierung sämtlicher Datenbursts gemäß dem falschen Modulationsverfahren führen muss. Der erfindungsgemäße Mobilfunkempfänger ermöglicht ferner auch dann eine Dekodierung der Gruppe einheitlich modulierter Datenbursts, wenn die blinde Detektion für die einzelnen Datenbursts der Gruppe unterschiedliche Modulationsverfahren ermittelt und somit ein in sich widersprüchliches Ergebnis liefert. Bei widersprüchlichen Schätzergebnissen wird eine Dekodierung der Gruppe einheitlich modulierter Datenbursts anhand einer Mehrheitsentscheidung über das zugrunde liegende Modulationsverfahren ermöglicht. Auch bei uneinheitlichem Ergebnis der blinden Detektion für die einzelnen Datenbursts der Gruppe kann eine Dekodierung dieser Datenbursts dann erfolgen, wenn für die Datenbursts ein mehrheitlich vorliegendes Modulationsverfahren feststellbar ist.

Wenn also beispielsweise im GSM-Standard vier aufeinanderfolgende Datenbursts empfangen werden, von denen bekannt ist, dass sie entsprechend demselben Modulationsverfahren moduliert wurden, dann wird zunächst für jeden der Datenbursts mittels blinder Detektion das zugrunde liegende Modulationsverfahren geschätzt. Wenn die Schätzung ergibt, dass der erste, zweite und vierte Datenbursts GMSK-moduliert ist, während der dritte Datenbursts 8PSK moduliert ist, so ist dieses Ergebnis in sich widersprüchlich und würde bei bisherigen Lösungen dazu führen, dass die gesamte Gruppe von vier Datenbursts als nicht dekodierbar gilt. Die erfindungsgemäße Lösung ermöglicht auch in diesem Fall eine Dekodierung, indem ermittelt wird, welches Modulationsverfahren für die Bursts der Gruppe überwiegend geschätzt wurde. Im beschriebenen Beispiel wurde geschätzt, dass die überwiegende Zahl (3 von 4) Datenbursts GMSK-moduliert ist. Für den dritten Datenburst wurde geschätzt, dass er 8PSK-moduliert ist. Hier scheint es sich um eine fehlerhafte Schätzung, sozusagen um einen Ausreißer zu handeln. Bei der erfindungsgemäßen Lösung würde die Dekodierung der gesamten Vierergruppe von Datenbursts entsprechend dem mehrheitlich geschätzten GMSK-Verfahren erfolgen, d.h. auch der dritte Datenburst würde mittels eines GMSK-Faltungsdekodierers dekodiert. Die erfindungsgemäße Lösung hat insofern den Vorteil, dass die Gruppe einheitlich modulierter Datenbursts auch dann dekodierbar ist, wenn einzelne Schätzungen des zugrunde liegenden Modulationsverfahrens fehlerhaft sind. Dadurch, dass hinsichtlich der Schätzungsergebnisse eine Mehrheitsentscheidung getroffen wird, kann die Qualität der Kanaldekodierung gesteigert und die Bitfehlerrate abgesenkt werden. Eine Neuübertragung der Datenbursts der Gruppe ist nur mehr in den Fällen notwendig, in denen keines der Modulationsverfahren als überwiegend vorliegend identifiziert werden kann.

Gemäß der Erfindung entzerren die Mittel zur Kanalentzerrung jeden Datenburst nach dessen Empfang entsprechend der für fahrens. Für die Kanalentzerrung, die z.B. unter Verwendung eines Viterbi-Algorithmus durchgeführt wird, ist die Kenntnis des Modulationsverfahrens, gemäß dem der Datenburst senderseitig moduliert wurde, notwendig. Grundsätzlich wird die Kanalentzerrung vor der Kanaldekodierung durchgeführt. Jeder Datenburst wird unmittelbar nach seinem Empfang entsprechend der speziell für diesen Datenburst vorgenommenen Modulationsschätzung entzerrt. Während also zum Zweck der Kanaldekodierung eine Mehrheitsentscheidung getroffen wird, welches Modulationsverfahren in der überwiegenden Zahl der Fälle vorliegt, erfolgt die Entscheidung über das zugrunde liegende Modulationsverfahren für die Zwecke der Kanalentzerrung nur anhand des einzelnen Datenbursts. Dies bietet den Vorteil, dass jeder Datenburst unmittelbar nach seinem Empfang entzerrt werden kann. Die sofortige Entzerrung der einzelnen Datenbursts führt somit zu einer beschleunigten Auswertung der empfangenen Daten.

Entsprechend einer vorteilhaften Ausführungsform der Erfindung handelt es sich bei einem der Modulationsverfahren um GMSK. GMSK (Gaussian Minimum Shift Keying) bezeichnet das bisher überwiegend verwendete Modulationsverfahren, bei dem ein Zustandsraum mit den Zuständen +1 und -1 verwendet wird. Dieses sehr einfache und daher relativ störungssichere Modulationsverfahren wird im Paketdienst GPRS eingesetzt. Insofern ist es von Vorteil, auch im Nachfolgestandard EGPRS das Modulationsverfahren GMSK weiter zu verwenden, um so die Kompatibilität zum bisherigen Standard herstellen zu können.

Eine weitere vorteilhafte Ausführungsform der Erfindung sieht vor, dass es sich bei einem der Modulationsverfahren um 8PSK handelt. Bei 8PSK wird ein komplexwertiger Zustandsraum mit 2³=8 möglichen Zuständen verwendet. Verglichen mit dem Standard GMSK wird so eine um den Faktor 3 höhere Datenübertragungsrate ermöglicht. Aus diesem Grund wird für die Mobilfunkübertragung in Zukunft in erster Linie das Modülationsfunkübertragung in Zukunft in erster Linie das Modulationsverfahren 8PSK eingesetzt werden, das auch für den Paketdienst EGPRS (Enhanced GPRS) vorgesehen ist.

Gemäß einer weiteren vorteilhaften Ausführungsform der Erfindung liefern die Mittel zur Kanalentzerrung Softwerte, welche der Kanaldekodierung zugeführt werden. Bei einem als "Softwert" vorliegenden Datenwert wird zusätzlich zu dem eigentlichen Datenwert eine Verlässlichkeitsinformation mitgeliefert, die angibt, welches Gewicht dem Datenwert bei der Auswertung zuerkannt werden sollte. Beispielsweise kann die Reliability beziehungsweise Verlässlichkeitsinformation als Wert zwischen 0 und 1 kodiert werden. Der eigentliche Datenwert dagegen wird als Vorzeichen des Softwertes angegeben. Ein Betrag des Softwerts, der nahe an Null liegt, gibt an, dass dem Datenwert nur eine geringe Zuverlässigkeit zukommt und dass der Datenwert bei der Auswertung nur in geringem Maß berücksichtigt werden sollte. Ein Softwert, dessen Betrag nahe an 1 liegt, gilt dagegen als sehr verlässlich; einem derartigen Wert kommt bei der Viterbi-basierten Kanaldekodierung ein hohes Gewicht zu. Der Vorteil bei der Verwendung von Softwerten ist, dass mittels eines einzigen Werts sowohl der Datenwert selbst (in Form des Vorzeichens) als auch die Verlässlichkeit des Datenwerts (in Form des Betrags des Softwerts) ausgedrückt werden kann. Für die Kanalentzerrung und Kanaldekodierung mit Mobilfunkempfängern bietet sich daher die Verwendung von Softwerten an, da sich durch Berücksichtigung der Verlässlichkeitsinformationen die Bitfehlerrate signifikant absenken lässt.

Gemäß einer vorteilhaften Ausführungsform der Erfindung bleiben für den Fall, dass für die überwiegende Anzahl von Datenbursts einer Gruppe einheitlich modulierter Datenbursts ein erstes Modulationsverfahren geschätzt wurde, diejenigen Datenbursts, für die ein anderes als das erste Modulationsverfahren geschätzt wurde, bei der Dekodierung unberücksichtigt. Für diese Datenbursts liefert die Modulationsschätzung ein Modulationsverfahren, das sich von dem für die Mehrheit der Gruppe von Datenbursts geschätzten Modulationsverfahren unterscheidet. Es kann daher davon ausgegangen werden, dass das Modulationsverfahren für diesen Datenburst fehlerhaft geschätzt wurde. Wenn Kanalentzerrer verwendet werden, die jeden Datenburst sofort nach dessen Empfang basierend auf der für diesen Datenburst vorgenommenen Modulationsschätzung entzerren, so kann davon ausgegangen werden, dass dieser Datenburst auch fehlerhaft entzerrt wurde. Eine Berücksichtigung dieser aufgrund einer falschen Modulationsschätzung erhaltenen Daten bei der Kanaldekodierung würde das Ergebnis der Kanaldekodierung verschlechtern. Insofern ist es von Vorteil, diejenigen Datenbursts, für die ein anderes als das erste Modulationsverfahren geschätzt wurde, bei der Dekodierung unberücksichtigt zu lassen. Dies verbessert das Ergebnis der Kanaldekodierung.

Gemäß einer weiteren vorteilhaften Ausführungsform der Erfindung liefern die Mittel zur Kanalentzerrung Softwerte, welche der Kanaldekodierung zugeführt werden. Dabei werden die Softwerte derjenigen Datenbursts, für die ein anderes als das mehrheitlich vorliegende erste Modulationsverfahren geschätzt wurde, gleich Null gesetzt. Durch Nullsetzen der Softwerte eines Datenbursts, dessen Modulationsverfahren fehlerhaft geschätzt wurde, kann auf einfache Weise erreicht werden, dass die Softwerte dieser Datenbursts bei der Dekodierung unberücksichtigt bleiben.

Diese Vorgehensweise ist insbesondere dann von Vorteil, wenn die Mittel zur Kanalentzerrung jeden Datenburst unmittelbar nach dessen Empfang entsprechend der für diesen Datenburst individuell vorgenommenen Schätzung des Modulationsverfahrens entzerren. Wenn die für den empfangenen Datenburst vorgenommene Modulationsschätzung von der für die Mehrheit der Datenbursts der Gruppe geschätzten Modulation abweicht, so kann davon ausgegangen werden, dass die Modulationsschätzung für diesen Datenburst fehlerhaft ist. Die Kanalentzerrung für diesen Datenburst wurde in diesem Fall basierend auf der fehlerhaften Modulationsschätzung durchgeführt und ist insofern ebenfalls fehlerhaft. Deswegen ist es von Vorteil, diejenigen Datenbursts, für die ein anderes als das überwiegend vorliegende Modulationsverfahren geschätzt wurde, bei der Dekodierung unberücksichtigt zu lassen, indem die Softwerte dieser Datenbursts gleich Null gesetzt werden. Ein Zuverlässigkeitswert von Null hat zur Folge, dass die Datenwerte dieses Datenbursts bei der Dekodierung vollkommen unberücksichtigt bleiben und insofern das Dekodierungsergebnis nicht verfälschen. Das Dekodierungsergebnis wird daher ausschließlich durch die Softwerte derjenigen Datenbursts bestimmt, für die das zugrunde liegende Modulationsverfahren richtig geschätzt wurde und die daher auch korrekt entzerrt wurden.

Gemäß einer besonders bevorzugten Ausführungsform der Erfindung umfasst die Gruppe einheitlich modulierter Datenbursts vier Datenbursts. Dies stellt den gängigen GSM-Standard dar. In diesem Standard kann jeweils nach vier Datenbursts ein Wechsel der Modulationsart erfolgen.

Falls drei der vier Datenbursts einer Gruppe als entsprechend einem ersten Modulationsverfahren moduliert geschätzt werden und einer der Datenbursts als entsprechend einem zweiten Modulationsverfahren moduliert geschätzt wird, erfolgt die Dekodierung entsprechend dem ersten Modulationsverfahren. Bei einer vier Bursts umfassenden Gruppe von einheitlich modulierten Datenbursts ist in diesem Fall eine verlässliche Aussage über das verwendete Modulationsverfahren möglich. Anders stellt sich die Situation dar, wenn bei einer Gruppe von vier einheitlich modulierten Datenbursts zwei der Datenbursts als entsprechend einem ersten Modulationsverfahren moduliert geschätzt werden und zwei der Datenbursts als entsprechend einem zweiten Modulationsverfahren moduliert geschätzt werden. In diesem Fall kann ein überwiegend geschätztes Modulationsverfahren nicht festgestellt werden, und deshalb müssen alle vier Datenbursts der Gruppe verworfen werden.

Bei dem erfindungsgemäßen Verfahren zur Dekodierung von Datenbursts in einem Mobilfunkempfänger wird zunächst für jeden empfangenen Datenburst einer Gruppe einheitlich modulierter Datenbursts geschätzt, entsprechend welchem Modulationsverfahren der Datenburst moduliert ist. Anschließend wird festgestellt, welches Modulationsverfahren für die Mehrheit der Datenbursts der Gruppe einheitlich modulierter Datenbursts geschätzt wurde. Im nächsten Verfahrensschritt werden sämtliche Datenbursts der Gruppe einheitlich modulierter Datenbursts entsprechend dem überwiegend geschätzten Modulationsverfahren dekodiert. Falls ein überwiegend geschätztes Modulationsverfahren nicht feststellbar ist, werden die Datenbursts der Gruppe verworfen.

Nachfolgend wird die Erfindung anhand eines in der Zeichnung dargestellten Ausführungsbeispiels weiter beschreiben. Es zeigt:

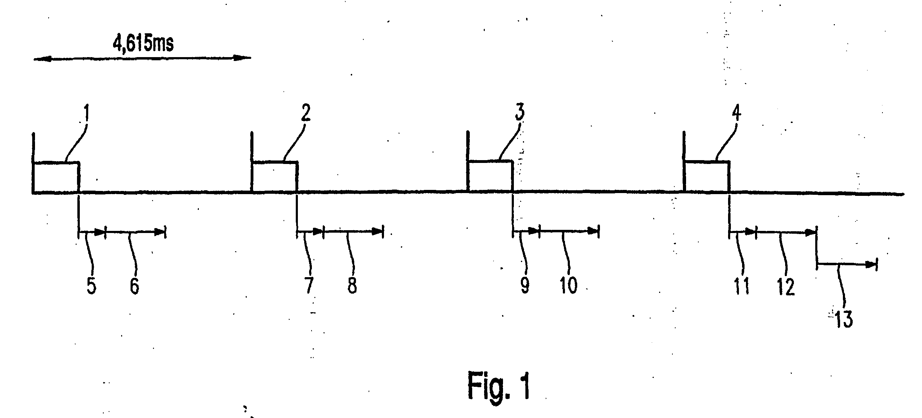

- Fig. 1: eine Ausführungsform der Erfindung, bei der die Kanalentzerrung unmittelbar nach dem Empfang eines Datenbursts vorgenommen wird.

In Fig. 1 ist der empfängerseitige Zeitablauf beim Empfang von vier aufeinanderfolgenden Datenbursts 1, 2, 3, 4 dargestellt. Von diesen vier Datenbursts ist bekannt, dass sie entweder alle gemäß dem Modulationsverfahren GMSK (Gaussian Minimum Shift Keying) oder entsprechend dem Modulationsverfahren 8PSK (8 Phase Shift Keying) moduliert wurden.

Nach dem vollständigen Empfang des ersten Datenbursts 1 wird eine blinde Detektion 5 für den ersten Datenburst durchgeführt, um das für die Modulation des ersten Datenbursts 1 verwendete Modulationsverfahren herauszufinden. Wenn die blinde Detektion 5 für den ersten Datenburst ergibt, dass der Datenburst 1 8PSK-moduliert ist, dann wird unmittelbar anschließend an die blinde Detektion 5 der Kanalentzerrer 6 für 8PSK gestartet. Der Kanalentzerrer 6 beseitigt die sogenannte Intersymbol-Interferenz und liefert für den empfangenen ersten Datenburst 1 Softwerte, deren Vorzeichen jeweils den Datenwert kodieren, und deren Beträge das Gewicht beziehungsweise die Verlässlichkeit angeben, die dem Datenwert zukommt.

Entsprechend stellt nach dem Empfang des zweiten Datenbursts 2 die blinde Detektion 7 fest, entsprechend welchem Modulationsverfahren der zweite Datenburst 2 moduliert ist. Entsprechend der detektierten Modulation wird entweder der Kanalentzerrer für GMSK oder der Kanalentzerrer für 8PSK gestartet (8). Derselbe Ablauf wird für die Datenbursts 3 und 4 wiederholt, für die jeweils eine blinde Detektion 9, 11 und anschließend eine Kanalentzerrung 10, 12 durchgeführt wird. Sobald die Kanalentzerrung 12 für den vierten Datenburst 4 abgeschlossen ist, liegen für alle vier Datenbursts 1, 2, 3, 4 die entzerrten Softwerte vor, und die Kanaldekodierung 13 kann gestartet werden.

Wenn sich die blinde Detektion bei allen vier Bursts 1, 2, 3, 4 für dasselbe Modulationsverfahren entschieden hat, dann ist dieses Ergebnis in sich konsistent und alle von den Kanalentzerrern 6, 8, 10, 12 ermittelten Softwerte werden an den Kanaldekodierer 13 weitergereicht.

Wenn dagegen die blinde Detektion 5, 7, 9, 11 dreimal eine GMSK-Entscheidung und einmal eine 8PSK-Entscheidung liefert, dann wird davon ausgegangen, dass alle vier Datenbursts 1, 2, 3, 4 GMSK-moduliert sind. Daraus ergibt sich, dass die für einen der Bursts getroffene 8PSK-Entscheidung fehlerhaft war. Für diesen Datenburst wurde die Kanalentzerrung entsprechend dem Standard 8PSK durchgeführt, und daher sind auch die so erhaltenen Softwerte fehlerhaft. Deshalb werden die Softwerte dieses Bursts auf Null gesetzt, während die Softwerte der restlichen drei Bursts unverändert an den Kanaldekodierer 13 weitergereicht werden. Die auf Null gesetzten Softwerte des Kanalentzerrers liefern dem Kanaldekodierer 13 zwar keine Information, haben aber auch keinen negativen Einfluss. Eine Null als Eingangswert für den Kanaldekodierer 13 ist deshalb besser als ein betragsmäßig großer Softwert mit falschem Vorzeichen, der aufgrund einer fehlerhaften Modulationsdetektion bestimmt wurde. Durch Nullsetzen der Softwerte des Bursts mit der 8PSK-Entscheidung wird das Ergebnis der Kanaldekodierung daher verbessert.

Falls es drei 8PSK-Entscheidungen und eine GMSK-Entscheidung gibt, so werden die Softwerte des Bursts mit der GMSK-Entscheidung auf Null gesetzt. Die Softwerte der restlichen drei Bursts werden unverändert an den Kanaldekodierer 13 weitergereicht. Auch in diesem Fall lässt sich anhand der von der blinden Detektion 5, 7, 9, 11 gelieferten Ergebnisse eine klare Mehrheitsentscheidung ableiten.

Wenn es dagegen je zwei GMSK-Entscheidungen und zwei 8PSK-Eintscheidungen gibt, dann liegt eine Patt-Situation vor. In diesem Fall werden alle Softwerte ignoriert und die vier Bursts gelten als nicht dekodierbar.

Bei einer typischen Implementierung des in Fig. 1 gezeigten Ablaufs sind die blinde Detektion 5, 7, 9, 11, die Kanalentzerrer 6, 8, 10, 12 sowie der Kanaldekodierer 13 als Routinen in einem digitalen Signalprozessor (DSP) implementiert, die je nach Bedarf aufgerufen werden können.

## Patentansprüche

1. Mobilfunkempfänger, mit
- Mitteln zur Modulationsschätzung (5, 7, 9, 11), welche ausgelegt sind für jeden empfangenen Datenburst einer Gruppe einheitlich modulierter Datenbursts (1, 2, 3, 4) zu schätzen, entsprechend welchem Modulationsverfahren der Datenburst moduliert ist,
- Mitteln zur Kanalentzerrung (6, 8, 10, 12), welche ausgelegt sind eine Entzerrung der empfangenen Datenbursts (1, 2, 3, 4) durchzuführen und dabei jeden Datenburst (1, 2, 3, 4) nach dessen Empfang entsprechend der für diesen Datenburst vorgenommenen Schätzung des Modulationsverfahrens zu entzerren, und
- Mitteln zur Kanaldekodierung (13), welche ausgelegt sind festzustellen, welches Modulationsverfahren für die Mehrheit der Datenbursts der Gruppe einheitlich modulierter Datenbursts (1, 2, 3, 4) geschätzt wurde, und, sofern ein überwiegend geschätztes Modulationsverfahren feststellbar ist, sämtliche Datenbursts (1, 2, 3, 4) der Gruppe entsprechend dem überwiegend geschätzten Modulationsverfahren zu dekodieren, und wobei die Mittel zur Kanaldekodierung (13) ferner ausgelegt sind die Datenbursts (1, 2, 3, 4) der Gruppe nicht zu dekodieren, falls ein überwiegend geschätztes Modulationsverfahren nicht feststellbar ist.

2. Mobilfunkempfänger nach Anspruch 1,
**dadurch gekennzeichnet,**
**dass** es sich bei einem der Modulationsverfahren um GMSK handelt.

3. Mobilfunkempfänger nach Anspruch 1 oder 2,
**dadurch gekennzeichnet,**
**dass** es sich bei einem der Modulationsverfahren um 8PSK handelt.

4. Mobilfunkempfänger nach einem der vorhergehenden Ansprüche,
**dadurch gekennzeichnet,**
**dass** die Mittel zur Kanalentzerrung (6, 8, 10, 12) ausgelegt sind Softwerte zu liefern, welche den Mitteln der Kanaldekodierung (13) zugeführt werden.

5. Mobilfunkempfänger nach einem der vorhergehenden Ansprüche,
**dadurch gekennzeichnet,**
**dass** die Mittel zur Kanaldekodierung (13) ausgelegt sind, falls für die überwiegende Anzahl von Datenbursts der Gruppe einheitlich modulierter Datenbursts (1, 2, 3, 4) ein erstes Modulationsverfahren geschätzt wurde, diejenigen Datenbursts, für die ein anderes als das erste Modulationsverfahren geschätzt wurde, bei der Dekodierung (13) unberücksichtigt zu lassen.

6. Mobilfunkempfänger nach Anspruch 5,
**dadurch gekennzeichnet,**
**dass** die Mittel zur Kanalentzerrung (6, 8, 10, 12) ausgelegt sind Softwerte zu liefern, welche den Mitteln der Kanaldekodierung (13) zugeführt werden, und die Softwerte der Datenbursts, für die ein anderes als das erste Modulationsverfahren geschätzt wurde, gleich Null zu setzen.

7. Mobilfunkempfänger nach einem der vorhergehenden Ansprüche,
**dadurch gekennzeichnet,**
**dass** die Gruppe einheitlich modulierter Datenbursts (1, 2, 3, 4) vier Datenbursts umfasst.

8. Mobilfunkempfänger nach Anspruch 7,
**dadurch gekennzeichnet,**
**dass** die Mittel zur Kanalodekodierung (13) ausgelegt sind, falls drei der Datenbursts als entsprechend einem ersten Modulationsverfahren moduliert geschätzt werden und einer der Datenbursts als entsprechend einem zweiten Modulationsverfahren moduliert geschätzt wird, die Dekodierung (13) entsprechend dem ersten Modulationsverfahren durchzuführen.

9. Mobilfunkempfänger nach Anspruch 7,
**dadurch gekennzeichnet,**
**dass** die Mittel zur Kanaldekodierung (13) ausgelegt sind, falls zwei der Datenbursts als entsprechend einem ersten Modulationsverfahren moduliert geschätzt werden und zwei der Datenbursts als entsprechend einem zweiten Modulationsverfahren geschätzt werden, die Datenbursts (1, 2, 3, 4) der Gruppe zu verwerfen.

10. Verfahren zur Dekodierung von Datenbursts in einem Mobilfunkempfänger, **gekennzeichnet durch** folgende Schritte:
a) Schätzen, für jeden empfangenen Datenburst einer Gruppe einheitlich modulierter Datenbursts (1, 2, 3, 4), entsprechend welchem Modulationsverfahren der Datenburst moduliert ist;
b) Entzerren jedes Datenbursts (1, 2, 3, 4) nach seinem Empfang entsprechend der für diesen Datenburst vorgenommenen Schätzung des Modulationsverfahrens; und
c) Feststellen, welches Modulationsverfahren für die Mehrheit der Datenbursts der Gruppe einheitlich modulierter Datenbursts (1, 2, 3, 4) geschätzt wurde; und
d) sofern ein überwiegend geschätztes Modulationsverfahren feststellbar ist, Dekodieren sämtlicher Datenbursts der Gruppe einheitlich modulierter Datenbursts (1, 2, 3, 4) entsprechend dem überwiegend geschätzten Modulationsverfahren, und falls ein überwiegend geschätztes Modulationsverfahren nicht feststellbar ist, Verwerfen der Datenbursts (1, 2, 3, 4) der Gruppe einheitlich modulierter Datenbursts (1, 2, 3, 4).

11. Verfahren nach Anspruch 10,
**dadurch gekennzeichnet,**
**dass** es sich bei einem der Modulationsverfahren um GMSK handelt.

12. Verfahren nach Anspruch 10,
**dadurch gekennzeichnet,**
**dass** es sich bei einem der Modulationsverfahren um 8PSK handelt.

13. Verfahren nach einem der Ansprüche 10 bis 12,
**dadurch gekennzeichnet,**
**dass** das Entzerren der empfangenen Datenbursts (1, 2, 3, 4) vor dem Dekodieren (13) durchgeführt wird.

14. Verfahren nach Anspruch 13,
**dadurch gekennzeichnet,**
**dass** durch das Entzerren Softwerte geliefert werden, welche der Dekodierung (13) zugeführt werden.

15. Verfahren nach einem der Ansprüche 10 bis 14,
**dadurch gekennzeichnet,**
**dass**, falls für die überwiegende Anzahl von Datenbursts der Gruppe einheitlich modulierter Datenbursts (1, 2, 3, 4) ein erstes Modulationsverfahren geschätzt wurde, diejenigen Datenbursts, für die ein anderes als das erste Modulationsverfahren geschätzt wurde, bei der Dekodierung (13) unberücksichtigt bleiben.

16. Verfahren nach Anspruch 15,
**dadurch gekennzeichnet,**
**dass** die Mittel zur Kanalentzerrung (6, 8, 10, 12) Softwerte liefern, welche der Dekodierung (13) zugeführt werden, und dass die Softwerte der Datenbursts, für die ein anderes als das erste Modulationsverfahren geschätzt wurde, gleich Null gesetzt werden.

17. Verfahren nach einem der Ansprüche 10 bis 16,
**dadurch gekennzeichnet,**
**dass** die Gruppe einheitlich modulierter Datenbursts (1, 2, 3, 4) vier Datenbursts umfasst.

## Claims

1. Mobile radio receiver, having
- means for modulation estimation (5, 7, 9, 11) which, are designed for every received data burst in a group of uniformly modulated data bursts (1, 2, 3, 4), to estimate which modulation method has been used for modulating the data burst,
- means for channel equalization (6, 8, 10, 12) which are designed to equalize the received data bursts (1, 2, 3, 4), and in the process equalize each data burst (1, 2, 3, 4) after reception thereof on the basis of the modulation method's estimation carried out for this data burst, and
- means for channel decoding (13) which are designed to establish which modulation method has been estimated for the majority of the data bursts in the group of the uniformly modulated data bursts (1, 2, 3, 4), and, if it is possible to establish a predominantly estimated modulation method, decode all the data bursts (1, 2, 3, 4) in the group on the basis of the predominantly estimated modulation method, and also the means for channel decoding (13) being designed not to decode the data bursts (1, 2, 3, 4) in the group if it is not possible to establish a predominantly estimated modulation method.

2. Mobile radio receiver according to Claim 1,
**characterized**
**in that** one of the modulation methods is GMSK.

3. Mobile radio receiver according to Claim 1 or 2,
**characterized**
**in that** one of the modulation methods is 8PSK.

4. Modulation method according to one of the preceding claims,
**characterized**
**in that** the means for channel equalization (6, 8, 10, 12) are designed to deliver soft values which are supplied to the means for channel decoding (13).

5. Mobile radio receiver according to one of the preceding claims,
**characterized**
**in that** the means for channel decoding (13) are designed such that, if a first modulation method has been estimated for the predominant number of data bursts in the group of uniformly modulated data bursts (1, 2, 3, 4), they ignore during the decoding (13) those data bursts for which a modulation method other than the first modulation method has been estimated.

6. Mobile radio receiver according to Claim 6,
**characterized**
**in that** the means for channel equalization (6, 8, 10, 12) are designed to deliver soft values which are supplied to the means for channel decoding (13), and to set equal to zero the soft values for the data bursts for which a modulation method other than the first modulation method has been estimated.

7. Mobile radio receiver according to one of the preceding claims,
**characterized**
**in that** the group of uniformly modulated data bursts (1, 2, 3, 4) comprises four data bursts.

8. Mobile radio receiver according to Claim 7,
**characterized**
**in that** the means for channel decoding (13) are designed such that, if three of the data bursts are estimated as being modulated using a first modulation method and one of the data bursts is estimated as being modulated using a second modulation method, they carry out the decoding (13) on the basis of the first modulation method.

9. Mobile radio receiver according to Claim 7,
**characterized**
**in that** the means for channel decoding (13) are designed such that, if two of the data bursts are estimated as being modulated using a first modulation method and two of the data bursts are estimated as being modulated using a second modulation method, they reject the data bursts (1, 2, 3, 4) in the group.

10. Method for decoding data bursts in a mobile radio receiver, **characterized by** the following steps:
a) for every received data burst in a group of uniformly modulated data bursts (1, 2, 3, 4), it is estimated which modulation method has been used for modulating the data burst;
b) each data burst (1, 2, 3, 4) is equalized after reception thereof on the basis of the modulation method's estimation carried out for this data burst; and
c) it is established which modulation method has been estimated for the majority of the data bursts in the group of uniformly modulated data bursts (1, 2, 3, 4); and
d) if it is possible to establish a predominantly estimated modulation method, all the data bursts in the group of the uniformly modulated data bursts (1, 2, 3, 4) are decoded on the basis of the predominantly estimated modulation method, and if it is not possible to establish a predominantly estimated modulation method the data bursts (1, 2, 3, 4) in the group of uniformly modulated data bursts (1, 2, 3, 4) are rejected.

11. Method according to Claim 1,
**characterized**
**in that** one of the modulation methods is GMSK.

12. Method according to Claim 1,
**characterized**
**in that** one of the modulation methods is 8PSK.

13. Method according to one of Claims 10 to 12,
**characterized**
**in that** the received data bursts (1, 2, 3, 4) are equalized before the decoding (13).

14. Method according to Claim 13,
**characterized**
**in that** the equalizing delivers soft values which are supplied to the decoding (13).

15. Method according to one of Claims 10 to 14,
**characterized**
**in that** if a first modulation method has been estimated for the predominant number of data bursts in the group of uniformly modulated data bursts (1, 2, 3, 4), those data bursts for which a modulation method other than the first modulation method has been estimated are ignored during the decoding (13).

16. Method according to Claim 15,
**characterized**
**in that** the means for channel equalization (6, 8, 10, 12) deliver soft values which are supplied to the decoding (13), and in that the soft values for the data bursts for which a modulation method other than the first modulation method has been estimated are set equal to zero.

17. Method according to one of Claims 10 to 16,
**characterized**
**in that** the group of uniformly modulated data bursts (1, 2, 3, 4) comprises four data bursts.

## Revendications

1. Récepteur de radiocommunication mobile, comportant :
- des moyens pour l'estimation de modulation (5, 7, 9, 11) qui sont conçus pour estimer pour chaque salve de données reçue d'un groupe de salves de données modulées uniformément (1, 2, 3, 4) selon quel procédé de modulation la salve de données est modulée,
- des moyens pour l'égalisation de canal (6, 8, 10, 12) qui sont conçus pour effectuer une égalisation des salves de données reçues (1, 2, 3, 4) et pour égaliser ce faisant chaque salve de données (1, 2, 3, 4) après sa réception selon le procédé de modulation estimé pour cette salve de données, et
- des moyens pour le décodage de canal (13) qui sont conçus pour déterminer quel procédé de modulation a été estimé pour la majorité des salves de données du groupe de salves de données modulées uniformément (1, 2, 3, 4) et qui, dans la mesure où un procédé de modulation estimé majoritaire a pu être déterminé, décodent toutes les salves de données (1, 2, 3, 4) du groupe selon le procédé de modulation estimé majoritaire, les moyens pour le décodage de canal (13) étant aussi conçus pour ne pas décoder les salves de données (1, 2, 3, 4) du groupe si aucun procédé de modulation estimé majoritaire n'a pu être déterminé.

2. Récepteur de radiocommunication mobile selon la revendication 1,
**caractérisé par le fait que** l'un des procédés de modulation est le GMSK.

3. Récepteur de radiocommunication mobile selon la revendication 1 ou 2,
**caractérisé par le fait que** l'un des procédés de modulation est le 8PSK.

4. Récepteur de radiocommunication mobile selon l'une des revendications précédentes,
**caractérisé par le fait que** les moyens pour l'égalisation de canal (6, 8, 10, 12) sont conçus pour fournir des valeurs logicielles qui sont envoyées aux moyens pour le décodage de canal (13).

5. Récepteur de radiocommunication mobile selon l'une des revendications précédentes,
**caractérisé par le fait que** les moyens pour le décodage de canal (13) sont conçus pour, si un premier procédé de modulation a été estimé pour la majorité des salves de données du groupe de salves de données modulées uniformément (1, 2, 3, 4), ne pas prendre en compte lors du décodage (13) les salves de données pour lesquelles un autre procédé de modulation que le premier a été estimé.

6. Récepteur de radiocommunication mobile selon la revendication 5,
**caractérisé par le fait que** les moyens pour l'égalisation de canal (6, 8, 10, 12) sont conçus pour fournir des valeurs logicielles qui sont envoyées aux moyens pour le décodage de canal (13) et pour mettre à zéro les valeurs logicielles des salves de données pour lesquelles un autre procédé de modulation que le premier a été estimé.

7. Récepteur de radiocommunication mobile selon l'une des revendications précédentes,
**caractérisé par le fait que** le groupe de salves de données modulées uniformément (1, 2, 3, 4) comprend quatre salves de données.

8. Récepteur de radiocommunication mobile selon la revendication 7,
**caractérisé par le fait que** les moyens pour le décodage de canal (13) sont conçus pour, si trois des salves de données sont estimées comme étant modulées selon un premier procédé de modulation et l'une des salves de données est estimée comme étant modulée selon un deuxième procédé de modulation, effectuer le décodage (13) selon le premier procédé de modulation.

9. Récepteur de radiocommunication mobile selon la revendication 7,
**caractérisé par le fait que** les moyens pour le décodage de canal (13) sont conçus pour, si deux des salves de données sont estimées comme étant modulées selon un premier procédé de modulation et deux des salves de données sont estimées comme étant modulées selon un deuxième procédé de modulation, rejeter les salves de données (1, 2, 3, 4) du groupe.

10. Procédé pour le décodage de salves de données dans un récepteur de radiocommunication mobile, **caractérisé par** les étapes suivantes :
a) estimer, pour chaque salve de données reçues d'un groupe de salves de données modulées uniformément (1, 2, 3, 4), selon quel procédé de modulation la salve de données est modulée ;
b) égaliser chaque salve de données (1, 2, 3, 4) après sa réception selon le procédé de modulation estimé pour cette salve de données ;
c) déterminer quel procédé de modulation a été estimé pour la majorité des salves de données du groupe de salves de données modulées uniformément (1, 2, 3, 4) ; et
d) dans la mesure où un procédé de modulation estimé majoritaire a pu être déterminé, décoder toutes les salves de données du groupe de salves de données modulées uniformément (1, 2, 3, 4) selon le procédé de modulation estimé majoritaire et, si aucun procédé de modulation estimé majoritaire n'a pu être déterminé, rejeter les salves de données (1, 2, 3, 4) du groupe de salves de données modulées uniformément (1, 2, 3, 4).

11. Procédé selon la revendication 10,
**caractérisé par le fait que** l'un des procédés de modulation est le GMSK.

12. Procédé selon la revendication 10,
**caractérisé par le fait que** l'un des procédés de modulation est le 8PSK.

13. Procédé selon l'une des revendications 10 à 12,
**caractérisé par le fait que** l'égalisation des salves de données reçues (1, 2, 3, 4) est effectuée avant le décodage (13).

14. Procédé selon la revendication 13,
**caractérisé par le fait que** l'égalisation fournit des valeurs logicielles qui sont envoyées au décodage (13).

15. Procédé selon l'une des revendications 10 à 14,
**caractérisé par le fait que**, si un premier procédé de modulation a été estimé pour la majorité des salves de données du groupe de salves de données modulées uniformément (1, 2, 3, 4), les salves de données pour lesquelles un autre procédé de modulation que le premier a été estimé ne sont pas prises en compte lors du décodage (13).

16. Procédé selon la revendication 15,
**caractérisé par le fait que** les moyens pour l'égalisation de canal (6, 8, 10, 12) fournissent des valeurs logicielles qui sont envoyées au décodage (13) et que les valeurs logicielles des salves de données pour lesquelles un autre procédé de modulation que le premier a été estimé sont mises à zéro.

17. Procédé selon l'une des revendications 10 à 16,
**caractérisé par le fait que** le groupe de salves de données modulées uniformément (1, 2, 3, 4) comprend quatre salves de données.
